# EUROPEAN PATENT APPLICATION

(11) **EP 4 434 823 A1**
(43) Date of publication of application: **25.09.2024**
(21) Application number: 24160911.4
(22) Date of filing: 01.03.2024
(51) Int. Cl.: B60S 1/04, B60S 1/56

(54) **CLEANING SYSTEM**

(30) Priority: 22.03.2023 US 202363453837 P
(71) Applicant: Apple Inc., Cupertino, CA 95014 (US)
(72) Inventor: CONNOLLY, Paul M., Cupertino, CA 95014 (US); GULGUNJE, Prabhakar, Cupertino, CA 95014 (US); VEERASAMY, Vijayen S., Cupertino, CA 95014 (US)
(74) Representative: Lang, Johannes

(57) **Abstract**

A cleaning system includes an arm configured for connection to a cleaning implement. A base is spaced from the arm in an extension direction such that the cleaning implement is positionable between the arm and the base. The base and the arm are configured to move together in the extension direction between a recessed position and a raised position relative to a surface, and the arm is configured to rotate relative to the base in the raised position.

## Description

### CROSS-REFERENCE TO RELATED APPLICATIONS

This application claims the benefit of United States Provisional Application No. 63/453,837, filed on March 22, 2023, the contents of which are hereby incorporated by reference in their entirety for all purposes.

### FIELD

The present disclosure relates generally to the field of cleaning systems.

### BACKGROUND

A cleaning system may include a cleaning implement that cleans a surface by being engaged with, and moving relative to, the surface.

### SUMMARY

One aspect of the disclosure is a cleaning system that includes an arm configured for connection to a wiper blade. A base is spaced from the arm in an extension direction such that the wiper blade is positionable between the arm and the base in the extension direction. The base and the arm are each configured to move in the extension direction between a recessed position and a raised position relative to an exterior surface of a vehicle, and the arm is configured to rotate relative to the base when the base and the arm are in the raised position. Relative motion between the base and the arm is limited when the base and the arm move in the extension direction between the recessed position and the raised position.

Another aspect of the disclosure is a vehicle that includes a body having an exterior surface, and a cleaning system. The cleaning system includes a first arm configured for connection to a first wiper blade and a base that is spaced from the first arm in an extension direction. The first wiper blade is positionable between the first arm and the base in the extension direction. An actuator is configured to move the first arm and the base together in the extension direction between a recessed position and a raised position relative to the exterior surface of the body. Relative motion between the first arm and the base is limited when the first arm and the base move in the extension direction between the recessed position and the raised position. An exterior surface of the first arm is generally aligned with the exterior surface of the body when the first arm is in the recessed position. An exterior surface of the base is generally aligned with the exterior surface of the body when the base is in the raised position.

Yet another aspect of the disclosure is a vehicle that includes a body having an exterior surface, and a cleaning system. The cleaning system includes an arm configured for connection to a wiper blade and a base that is spaced from the arm in an extension direction. The wiper blade is positionable between the arm and the base in the extension direction. An actuator is configured to move the arm and the base together in the extension direction between a recessed position and a raised position relative to the exterior surface of the body, to rotate the arm relative to the exterior surface of the body with the arm in the raised position, and to adjust a force applied by the wiper blade to the exterior surface of the body with the arm in the raised position.

### BRIEF DESCRIPTION OF THE DRAWINGS

FIGS. 1A-C are illustrations of a portion of a vehicle.
FIGS. 2A-C are illustrations of a cleaning system of the vehicle of FIGS. 1A-C.
FIGS. 3A-B are illustrations of cross-sections of the cleaning system of FIGS. 2A-B.
FIG. 4 is an illustration of a cross-section of the cleaning system of FIG. 2C.
FIG. 5 is an illustration of an actuator of the cleaning system of FIGS. 2A-C.
FIG. 6 is a schematic diagram of a controller.

### DETAILED DESCRIPTION

The disclosure herein relates to a cleaning system for a vehicle. A cleaning system for a vehicle may include a wiper blade coupled to a wiper arm. The wiper arm may be configured to move the wiper blade across a surface (e.g., a glazing, etc.) of the vehicle to clean the surface. When the arm is at rest (e.g., the arm is not moving the wiper blade), the arm is positioned such that the wiper blade is located between the arm and the surface of the vehicle (e.g., an exterior surface of the vehicle, the glazing, etc.). Thus, the arm and the wiper blade can be viewed by an observer when the arm is at rest.

Implementations disclosed herein are directed to a cleaning system that is movable relative to an exterior surface of a vehicle between a recessed position and a raised position. In some implementations, the cleaning system may include an arm and a base. The arm may be configured for connection to a wiper blade. The base may be spaced apart from the arm and may be configured to engage the wiper blade. The cleaning system may have a recessed position, in which the wiper blade and the base cannot be seen by an observer (e.g., the wiper blade and the base are hidden). The cleaning system may also have a raised position, in which the wiper blade and the base can be seen by an observer. In the raised position, the arm is configured to rotate the wiper blade relative to an exterior surface of the vehicle to facilitate cleaning the exterior surface of the vehicle.

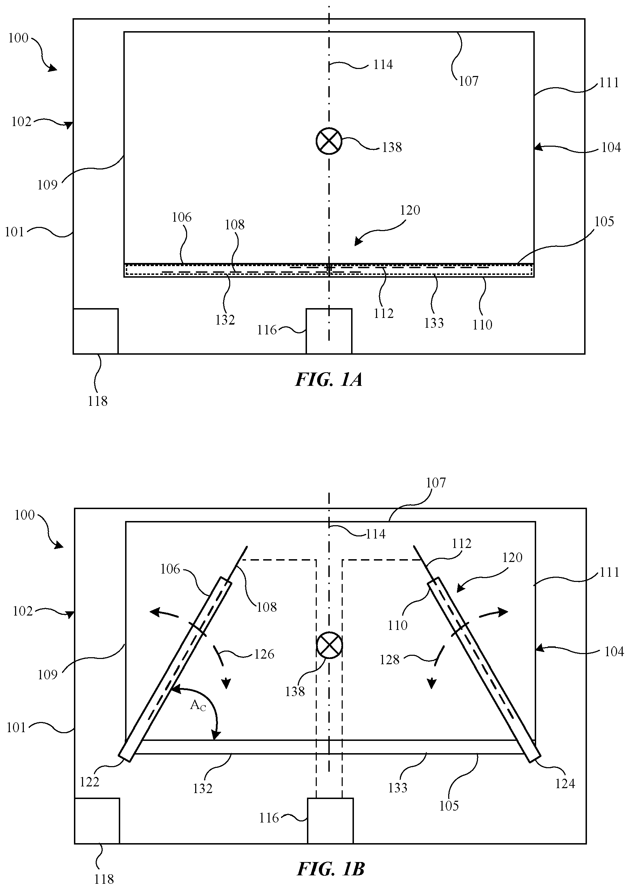

FIGS. 1A-1C are illustrations of a portion of a vehicle 100. The vehicle 100 can be any type of vehicle including, but not limited to, gas or diesel-powered vehicles, electric vehicles, boat or marine vehicles, aircraft (e.g., airplanes, helicopters, etc.), remote-controlled vehicles, etc. The portion shown in FIGS. 1A-1C may be a front portion, a rear portion, and/or a side portion of the vehicle 100.

The vehicle 100 includes a body 102. The body 102 may define an exterior surface 101 of the vehicle 100. The body 102 may be formed from metals (e.g., steel, aluminum, etc.), plastics (e.g., polycarbonate, polypropylene, etc.), or a combination thereof. In some implementations, the exterior surface 101 of the body 102 may follow a contoured (e.g., nonlinear) path.

The vehicle 100 may also include a glazing 104. The glazing 104 may be transparent or translucent to visible light to allow for an occupant of the vehicle 100 to view the external environment from within the cabin of the vehicle 100 through the glazing 104. In some implementations, an exterior surface of the glazing 104 may have a contour that approximately matches the contour of the exterior surface 101. In such implementations, the transition between the exterior surface of the glazing 104 and the exterior surface 101 may be small enough such that the transition is imperceptible to an observer. The glazing 104 may be formed from glass (e.g., tempered glass, laminated glass, etc.). The glazing 104 may also be formed from a plastic material (e.g., polycarbonate, acrylic, etc.).

The vehicle 100 is shown to include a cleaning system 120. In some implementations, the cleaning system 120 is configured to clean the exterior surface 101. For example, the cleaning system 120 may be configured to wipe fluid, liquid, dirt, and/or debris from the exterior surface 101 to clean the exterior surface 101. FIG. 1A shows the cleaning system 120 in a home position. When in the home position, the cleaning system 120 may be at rest (e.g., the cleaning system 120 may not be cleaning the exterior surface 101 of the vehicle 100). When in the home position, the cleaning system 120 may be in a recessed position relative to the exterior surface 101. For example, the components of the cleaning system 120 may be hidden from view by an observer when in the recessed position. More specifically, the components of the cleaning system 120 may be located inboard of the exterior surface 101 in an extension direction 138 when in the recessed position (e.g., the components of the cleaning system 120 may be located into the page of FIG. 1A in the extension direction 138 relative to the exterior surface 101 when in the recessed position). When in the home position, the cleaning system 120 may also be in a raised position relative to the exterior surface 101. For example, the components of the cleaning system 120 may be viewable by an observer when in the raised position. More specifically, the components of the cleaning system may be located outboard of the exterior surface 101 in the extension direction 138 when in the raised position (e.g., the components of the cleaning system 120 may be located out of the page of FIG. 1A in the extension direction 138 relative to the exterior surface 101 when in the raised position).

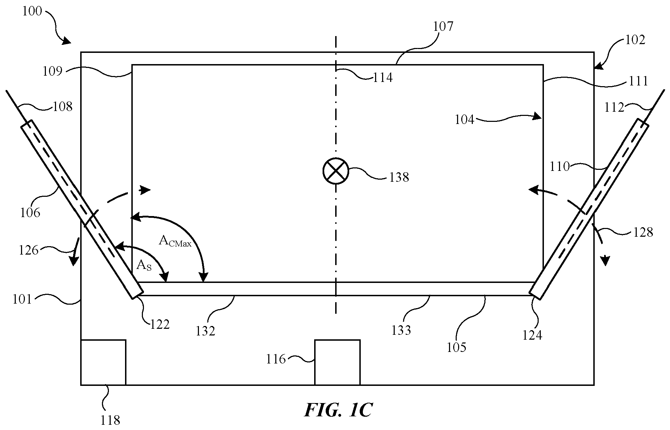

FIG. 1B shows the cleaning system 120 in a cleaning position. When in the cleaning position, a portion of the cleaning system 120 may be configured to move relative to the body 102 to clean the exterior surface 101 of the vehicle 100. Thus, the cleaning system 120 is in the raised position when the cleaning system 120 is in the cleaning position. In some implementations, the exterior surface 101 may include the glazing 104. The cleaning system 120 may be configured to wipe fluid, liquid, dirt, and/or debris from the glazing 104 to increase visibility through the glazing 104. FIG. 1C shows the cleaning system 120 in a service position. When in the service position, the cleaning system 120 may be configured for maintenance instead of for cleaning. For example, a portion of the cleaning system 120 may extend beyond the exterior surface 101 of the body 102 to permit maintenance to be performed (e.g., to replace and/or repair components of the cleaning system 120).

The cleaning system 120 may be located adjacent to the glazing 104 at an edge of the glazing 104. For example, the cleaning system 120 may be located adjacent to a first edge 105 of the glazing 104, as shown in FIGS. 1A-C. The cleaning system 120 may also be located adjacent to any of the other edges of the glazing 104. In some implementations, the cleaning system 120 may be located adjacent to a second edge 107 of the glazing 104 located opposite the first edge 105. The cleaning system 120 may also be located adjacent to an edge of the glazing 104 located at either side of the first edge 105 (e.g., a third edge 109 or a fourth edge 111).

It should be noted that the glazing 104 is an example of a portion of the exterior of the vehicle 100 that may be cleaned using the cleaning system 120, and the cleaning system 120 may also be used to clean other portions of the exterior surface 101. As an example, the cleaning system 120 may be utilized to clean an exterior surface of a translucent cover of a lighting device, such as a headlight, to allow for improved emission of light from the lighting device. As another example, the cleaning system 120 may be utilized to clean an exterior surface of a lens or cover (e.g., translucent or transparent) of a sensor or a sensor housing in order to allow improved sensing of the environment around the vehicle 100 by the sensor. Accordingly, the glazing 104 may be a portion of a roof of the vehicle 100 (e.g., a sunroof), a portion of front and/or rear doors of the vehicle 100 (e.g., front and/or rear windows configured to be raised and/or lowered relative to the front and/or rear doors), a portion of a forward or rearward portion of the vehicle 100 (e.g., a windshield or liftgate window), or a combination thereof. In some implementations, the glazing 104 may extend from the forward portion of the vehicle 100 to the rearward portion of the vehicle 100. For example, the glazing 104 may be a monolithic piece that extends contiguously from the forward portion of the vehicle 100 to the rearward portion of the vehicle 100, and along the sides of the vehicle 100. The cleaning system 120 may be associated with the glazing 104 at any of the disclosed locations.

As noted above, a sensor associated with the vehicle 100 may be located in front of the glazing 104 or behind the glazing 104 (e.g., the sensor and the glazing 104 may be provided in the form of a stack). The sensor associated with the vehicle 100 may include a camera (a visible light camera, an infrared camera, etc.) configured to capture images associated with the external environment around the vehicle 100. In some implementations, the camera may be positioned on the exterior surface 101 (e.g., on the body 102, on an exterior surface of the glazing 104, etc.). The camera may also be positioned behind the glazing 104 (e.g., the camera may capture images of the external environment through the glazing 104. In some implementations, the sensor may include a light detection and ranging (e.g., Lidar) system configured to generate a three-dimensional map of the external environment. The Lidar system may also be positioned on the exterior surface 101 or behind the glazing 104.

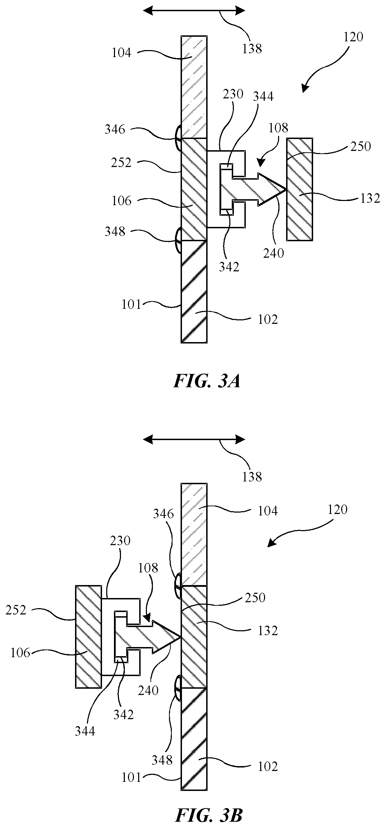

The cleaning system 120 may include a first arm 106 that is configured for connection to a first wiper blade 108. The first arm 106 may be formed from the same materials as the body 102 to allow the first arm 106 and the body 102 to have a uniform appearance. In some implementations, the first arm 106 may be formed from materials that are different than those used in the body 102. In some implementations, the first arm 106 may include a structural portion formed from materials that are different than those used in the body 102, and the first arm 106 may include a cladding portion that is formed from the same materials as the body 102 and defines an exterior surface of the first arm 106 to allow the first arm 106 and the body 102 to have a uniform appearance. The first arm 106 may connect to the first wiper blade 108 via a mechanical connection. For example, the first arm 106 may define a recess sized to receive a portion of the first wiper blade 108. Connection between the first arm 106 and the first wiper blade 108 is further described with reference to FIGS. 3A-B.

The cleaning system 120 may also include a second arm 110 that is configured for connection to a second wiper blade 112. The second arm 110 is similar to the first arm 106 such that the description of the first arm 106 may also apply to the second arm 110. The second wiper blade 112 is similar to the first wiper blade 108 such that the description of the first wiper blade 108 may also apply to the second wiper blade 112.

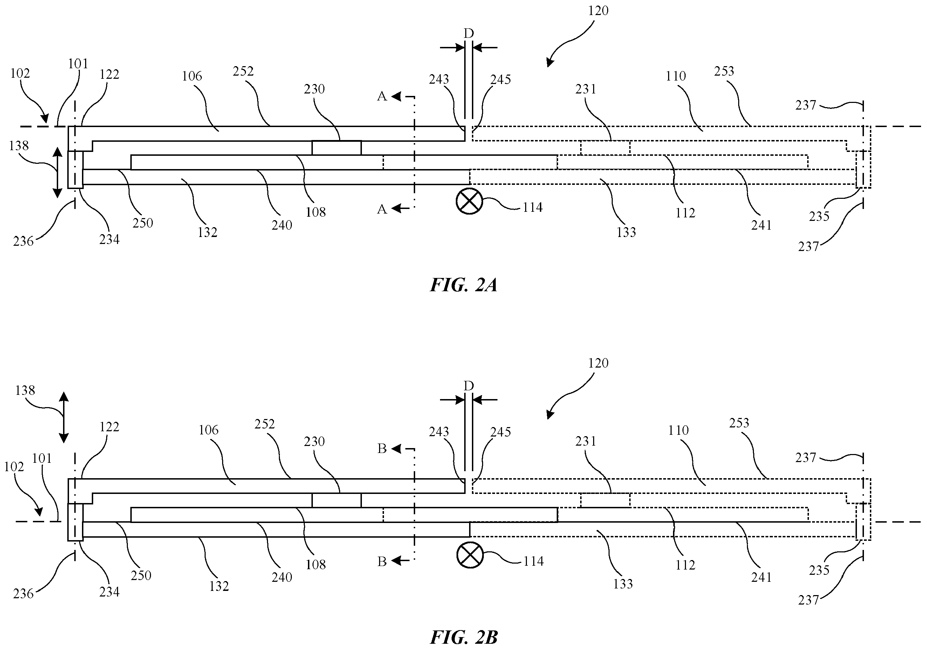

A first base 132 may be spaced apart from the first arm 106 in the extension direction 138 such that the first base 132 is located inboard (e.g., recessed) relative to the first arm 106 in the extension direction 138. The first base 132 is configured to support the first wiper blade 108 when the cleaning system 120 is in the home position. A second base 133 may be spaced apart from the second arm 110 in the extension direction 138 such that the second base 133 is located inboard relative to the second arm 110 in the extension direction 138. The second base 133 is configured to support the second wiper blade 112 when the cleaning system 120 is in the home position. The first base 132 and the second base 133 are further described with reference to FIGS. 2A-2C.

As shown in FIG. 1A, the first arm 106 may be configured to position the first wiper blade 108 in a first position relative to an axis 114 of the vehicle 100. In some implementations, the axis 114 may be generally aligned with a surface of the glazing 104 and may extend between a point of the first edge 105 and a point of the second edge 107. The second arm 110 may be configured to position the second wiper blade 112 in a second position relative to the axis 114. The first position of the first wiper blade 108 and the second position of the second wiper blade 112 may be spaced apart along the axis 114. The cleaning system 120 may limit interference between the first wiper blade 108 and the second wiper blade 112 when the cleaning system 120 is in the home position. For example, a portion of the first wiper blade 108 may extend beyond a boundary of the first arm 106 and across the axis 114 toward the second arm 110. A portion of the second wiper blade 112 may extend beyond a boundary of the second arm 110 and across the axis 114 toward the first arm 106. If the positions of the first wiper blade 108 and the second wiper blade 112 were not spaced apart along the axis 114, the first wiper blade 108 and the second wiper blade 112 may contact and/or interfere with each other when in the home position. Additionally, the cleaning system 120 may also be configured to clean a larger surface area of the vehicle 100 with the first wiper blade 108 and the second wiper blade 112 positioned as described as compared to an arrangement where the positions of the first wiper blade 108 and the second wiper blade 112 are not spaced apart along the axis 114 (and therefore could not extend across the axis 114 without interference).

The first arm 106 may include a first end portion 122 about which the first arm 106 is configured to rotate (e.g., in the direction of the arrow 126). For example, the first end portion 122 may be rotationally coupled to the body 102 and/or the glazing 104 such that the first arm 106 may rotate (e.g., pivot) relative to the body 102 and/or the glazing 104 to move the first arm 106 relative to the body 102 and/or the glazing 104 when the first arm 106 is in the cleaning position. Additionally, the first arm 106 may rotate relative to the first base 132 when the first arm 106 is in the cleaning position (shown in FIG. 1B). Thus, as the first arm 106 moves relative to the first base 132, the body 102, and/or the glazing 104, the first wiper blade 108 may contact the body 102 and/or the glazing 104 to clean the body 102 and/or the glazing 104.

The second arm 110 may include a second end portion 124 about which the second arm 110 is configured to rotate (e.g., in the direction of the arrow 128) in a manner similar to that described with reference to the first arm 106 and the first end portion 122. Thus, as the second arm moves relative to the second base 133, the body 102, and/or the glazing 104, the second wiper blade 112 may contact the body 102 and/or the glazing 104 to clean the body 102 and/or the glazing 104.

As shown, the first arm 106 may be configured to rotate about a pivot located near an intersection of the first edge 105 and the third edge 109. Additionally, the second arm 110 may be configured to rotate about a pivot located near an intersection of the first edge 105 and the fourth edge 111. In some implementations, the pivots may be positioned in other locations. For example, the first arm 106 may be configured to rotate about a pivot located near an intersection of the second edge 107 and the third edge 109. The second arm 110 may be configured to rotate about a pivot located near an intersection of the second edge 107 and the fourth edge 111.

In some implementations, the pivots may be positioned closer to the axis 114. For example, the first arm 106 may be configured to rotate about a pivot located near an intersection of the axis 114 and the first edge 105. The first arm 106 may also be configured to rotate about a pivot located near an intersection of the axis 114 and the second edge 107. The second arm 110 may be configured to rotate about a pivot located near an intersection of the axis 114 and the first edge 105. The second arm 110 may also be configured to rotate about a pivot located near an intersection of the axis 114 and the second edge 107.

Additionally, the first arm 106 and the second arm 110 are shown as rotating in opposite directions (e.g., in the directions of the arrow 126 and the arrow 128). In some implementations, the first arm 106 and the second arm 110 may be configured to rotate in the same direction.

The vehicle 100 may also include a sensor 116. In some implementations, the sensor 116 may be configured to generate a signal indicative of a condition related to the vehicle 100 and/or to the external environment. For example, the sensor 116 may be configured to determine a wear level of the first wiper blade 108 and to generate a signal indicative of the wear level. More specifically, the sensor 116 may be a force sensor configured to generate a signal related to a force of the first wiper blade 108 that is normal to the body 102 and/or the glazing 104 as the first wiper blade 108 is cleaning the body 102 and/or the glazing 104. In some implementations, a larger force may indicate a higher level of wear, as an increasing amount force may be required to hold the first wiper blade 108 against the body 102 and/or the glazing 104 as the first wiper blade 108 wears away from use. Accordingly, the sensor 116 may be coupled to the first wiper blade 108 and/or the second wiper blade 112 (indicated in FIG. 1B by the dashed lines connecting the sensor 116 to the first wiper blade 108 and the second wiper blade 112).

As another example, the sensor 116 may be configured to generate a signal indicative of an upcoming weather condition. More specifically, the sensor 116 may be a weather sensor configured to generate a signal related to an air temperature, an air pressure, a wind speed and/or direction, a moisture level, or a combination thereof. In some implementations, the signal may indicate whether precipitation (e.g., rain, snow, ice, sleet, etc.) is upcoming.

The sensor 116 may also be configured to generate a signal indicative of a condition of the vehicle 100. More specifically, the sensor 116 may be an accelerometer, a gyroscope, or a combination thereof (e.g., an inertial measurement unit) that is configured to generate a signal indicative of a speed of the vehicle 100, an acceleration of the vehicle 100, a direction of the vehicle 100, etc.

Additionally, the sensor 116 may be configured to generate a signal indicative of a cleanliness level of the glazing 104. More specifically, the sensor 116 may include a camera configured to generate a signal related to visibility through the glazing 104 (e.g., a higher level of visibility may indicate that the glazing 104 is cleaner and a lower level of visibility may indicate that the glazing 104 is dirtier).

In some implementations, the glazing 104 may be positioned in front of the sensor 116 such that the sensor 116 (e.g., the weather sensor, accelerometer, camera, etc.) may sense the characteristic through the glazing 104.

In some implementations, the cleaning system 120 may be configured to move the first arm 106 relative to the glazing 104 in response to various situations. For example, the cleaning system 120 may be configured to clean the glazing 104 in response to the glazing 104 being dirty. The cleaning system 120 may also be configured to clean the glazing 104 in response to precipitation. As another example, the cleaning system 120 may be configured to adjust a distance between the first arm 106 and the glazing 104 in the extension direction 138 in response to a speed of the vehicle 100. As described above, the sensor 116 may generate a signal indicative of one of the above situations (e.g., the glazing 104 being dirty, falling precipitation, vehicle speed, etc.), and the cleaning system 120 may be configured to move the first arm 106 (e.g., to clean the glazing 104 and/or to adjust the distance between the first arm 106 and the glazing 104 in the extension direction 138) in response to the signal from the sensor 116. In some implementations, the sensor 116 may be in communication with a controller 118, and the controller 118 may be configured to generate the signal.

FIG. 2A is an illustration of the cleaning system 120 in the recessed position. For purposes of clarity, components associated with the first arm 106 are shown in solid lines and components associated with the second arm 110 are shown in dotted lines. In the recessed position, the components of the cleaning system 120 are hidden from view from an observer. For example, only a portion of the first arm 106 and the second arm 110 (e.g., an exterior surface of the first arm 106 and an exterior surface of the second arm 110) is visible to an observer when the cleaning system 120 is in the recessed position. More specifically, the exterior surface of the first arm 106 is generally aligned with the exterior surface 101 when the first arm 106 is in the recessed position. The exterior surface of the second arm 110 is also generally aligned with the exterior surface 101 when the second arm 110 is in the recessed position. FIG. 2B is an illustration of the cleaning system 120 in the raised position. In the raised position, the components of the cleaning system 120 are visible to an observer (e.g., the components of the cleaning system 120 are located outboard from the exterior surface 101 in the extension direction 138).

FIGS. 2A-C show the first arm 106 and components associated with the first arm 106. The second arm 110 includes components similar to those associated with the first arm 106 such that the description of the first arm 106 also applies to the second arm 110.

As shown, a connector 230 is coupled to the first arm 106. A connector 231 is coupled to the second arm 110. The connector 231 is similar to the connector 230 such that the following description of the connector 230 also applies to the connector 231 and its relationship with the second arm 110 and the second wiper blade 112. The connector 230 is configured for connection with the first wiper blade 108. For example, the connector 230 may define an opening configured to receive a coupling feature of the first wiper blade 108. The connector 230 is further described with reference to FIGS. 3A-B. In some implementations, the connector 230 may be omitted and the first wiper blade 108 may connect directly to the first arm 106.

The first base 132 may be spaced from the first arm 106 in the extension direction 138 to define a space between the first base 132 and the first arm 106. The first wiper blade 108 may be positionable in the space between the first arm 106 and the first base 132 in the extension direction 138. The first base 132 may be configured to engage a portion of the first wiper blade 108 when the first wiper blade 108 is positioned in the space between the first arm 106 and the first base 132 (e.g., when the first arm 106 is in the home position). For example, the first base may have an outer surface 250 configured to support a contact surface 240 of the first wiper blade 108. More specifically, the first wiper blade 108 may have a convex shape when a contact surface 240 of the first wiper blade 108 is unsupported by (e.g., disengaged from) the first base 132. When engaged with the first wiper blade 108, the outer surface 250 of the first base 132 is configured to contact the contact surface 240 of the first wiper blade 108 to engage the first wiper blade 108. In some implementations, engagement between the first base 132 and the first wiper blade 108 may alter the shape of the first wiper blade 108. For example, the first wiper blade 108 may have a generally straight shape based on engagement between the first base 132 and the first wiper blade 108. As another example, the first wiper blade 108 may have a shape similar to a shape of the first base 132 based on engagement between the first base 132 and the first wiper blade 108. For example, the first base 132 may have a shape that follows a contour similar to a contour followed by the body 102 and/or the glazing 104. Thus, the first wiper blade 108 may have a shape that follows the same contour when engaged with the first base 132.

The second base 133 may be spaced from the second arm 110 in the extension direction 138 to define a space between the second base 133 and the second arm 110. When engaged with the second wiper blade 112, the second base 133 is configured to contact a contact surface 241 of the second wiper blade 112 to engage the second wiper blade 112. The second base 133 is similar to the first base 132 such that the above description of the first base 132 also applies to the second base 133 and its relationship with the second arm 110 and the second wiper blade 112.

The cleaning system 120 may also include an actuator 234 that is coupled to the first arm 106 and to the first base 132. In some implementations, the actuator 234 may be configured to move the first arm 106 and the first base 132 along an actuator axis 236. The actuator axis 236 may be generally aligned (e.g., within ten degrees of alignment) with the extension direction 138. For example, the actuator 234 may be configured to move the first arm 106 and the first base 132 in the extension direction 138 between the recessed position and the raised position. Thus, the first arm 106 and the first base 132 may be configured to move together in the extension direction 138 between the recessed position and the raised position relative to the body 102 and/or the glazing 104 such that the cleaning system 120 moves from being hidden to being exposed and viewable. In some implementations, the first arm 106 and the first base 132 may be configured to move separately in the extension direction 138 between the recessed position and the raised position relative to the body 102 and/or the glazing 104. In some implementations, relative motion between the first base 132 and the first arm 106 is limited when the first base 132 and the first arm 106 move in the extension direction 138 between the recessed position and the raised position.

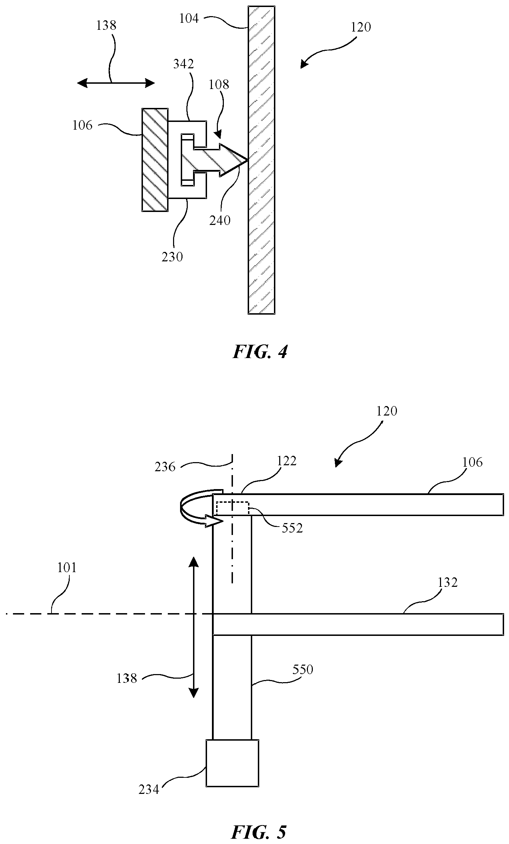

In some implementations, the actuator 234 may be configured to rotate the first arm 106 about the actuator axis 236 when the first arm 106 is in the raised position and the first base 132 is in the raised position (shown in FIG. 2B). For example, in addition to being translationally coupled to the actuator 234, the first arm 106 may be rotationally coupled to the actuator 234. More specifically, the first arm 106 may be configured to rotate relative to the body 102 and/or the glazing 104 as the actuator 234 rotates about the actuator axis 236 (e.g., the first arm 106 may move into or out of the page of FIG. 2B as the actuator 234 rotates about the actuator axis 236, which may also be referred to as a rotation axis). In some implementations, the first base 132 is configured to remain generally stationary relative to the body 102 and/or the glazing 104 (e.g., movement of less than ten millimeters relative to the body 102 and/or the glazing 104) during rotation of the first arm 106 relative to the body 102 and/or the glazing 104. Thus, the actuator 234 is configured to rotate the first arm 106 relative to the first base 132 when the first arm 106 and the first base 132 are in the raised position. The actuator 234 is further described with reference to FIG. 5.

The cleaning system 120 may also include an actuator 235 that is coupled to the second arm 110 and to the second base 133. The actuator 235 may be configured to move the second arm 110 and the second base 133 along an actuator axis 237 in a manner similar to that described above with respect to the actuator 234 and the first arm 106. The actuator 235 may also be configured to rotate the second arm 110 about the actuator axis 237 when the second arm 110 is in the raised position (shown in FIG. 2B) in a manner similar to that described above with respect to the actuator 234 and the first arm 106.

In some implementations, the second base 133 may be omitted, and the first base 132 may extend to engage both the first wiper blade 108 and the second wiper blade 112 (e.g., the first base 132 may extend from the third edge 109 to the fourth edge 111, shown in FIGS. 1A-1C). In addition, the second arm 110 and the first base 132 may be configured to move together in the extension direction 138 between a recessed position and a raised position relative to the body 102 and/or the glazing 104. In some implementations, the actuator 235 is omitted and the actuator 234 is configured to move the first arm 106, the second arm 110, the first base 132, and the second base 133.

As shown in FIG. 2A, a portion of the first wiper blade 108 is located between the second arm 110 and the second base 133 in the extension direction 138. In implementations where the second base 133 is omitted (e.g., the first base 132 extends from the third edge 109 to the fourth edge 111), a portion of the first wiper blade 108 may be located between the second arm 110 and the first base 132 in the extension direction 138. Thus, a portion of the first wiper blade 108 may be located between the second arm 110 and the first base 132 as the first arm 106, the second arm 110, and the first base 132 move between the recessed position and the raised position. In addition, a portion of the second wiper blade 112 is located between the first arm 106 and the first base 132. Thus, a portion of the second wiper blade 112 may be located between the first arm 106 and the first base 132 as the first arm 106, the second arm 110, and the first base 132 move between the recessed position and the raised position. The vehicle 100 may appear as though it does not have the ability to clean the glazing 104 when the cleaning system 120 is in the recessed position because the cleaning system 120 is hidden from view when in the recessed position.

In some implementations, the first arm 106 and the second arm 110 are configured to hide (e.g., limit viewing of) the first wiper blade 108 and the second wiper blade 112 when the first arm 106 and the second arm 110 are in the recessed position. For example, the first arm 106 may be located adjacent to the second arm 110 when the first arm 106 and the second arm 110 are in the recessed position. More specifically, a distance D between an end 243 of the first arm 106 located closest to the axis 114 and an end 245 of the second arm 110 located closest to the axis 114 may be small enough to limit viewing of the first wiper blade 108 and the second wiper blade 112 such that they are hidden from view by an observer. For example, the distance D between the end 243 of the first arm 106 and the end 245 of the second arm 110 may be less than three millimeters.

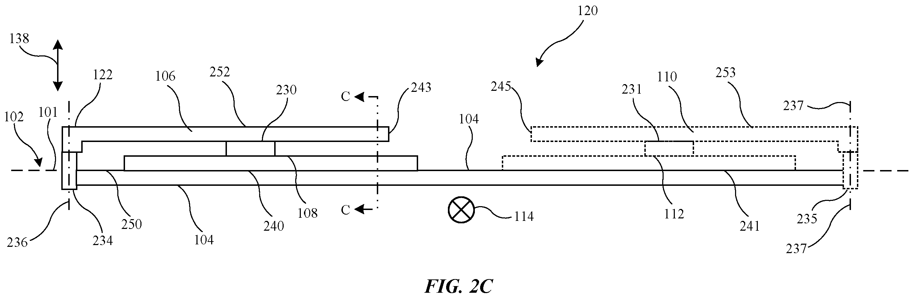

FIG. 2C shows the cleaning system 120 in the cleaning position (also shown in FIG. 1C). In the cleaning position, the first arm 106, the connector 230, and the first wiper blade 108 rotate relative to the first base 132 about the actuator axis 236. Rotation of the connector 230 relative to the first base 132 disengages a portion of the first wiper blade 108 from the first base 132 and engages a portion of the first wiper blade 108 with the glazing 104 and/or the exterior surface 101 to clean the glazing 104 and/or the exterior surface 101. The second arm 110, the connector 231, and the second wiper blade 112 rotate relative to the second base 133 about the actuator axis 237. Rotation of the connector 231 relative to the second base 133 disengages a portion of the second wiper blade 112 from the second base 133 and engages a portion of the second wiper blade 112 with the glazing 104 and/or the exterior surface 101 to clean the glazing 104 and/or the exterior surface 101.

As shown, the cleaning system 120 has various positions. In the recessed position (shown in FIGS. 1A and 2A), components of the cleaning system 120 (e.g., the first wiper blade 108, the second wiper blade 112, etc.) are hidden from view from an observer. For example, an exterior surface 252 of the first arm 106 and an exterior surface 253 of the second arm 110 are each generally aligned (e.g., within three millimeters of alignment) with the exterior surface 101 of the body 102 with the first arm 106 and the second arm 110 in the recessed position, thereby hiding the remaining components of the cleaning system 120 from view from an observer. In the raised position (shown in FIGS. 1B-1C and 2B-2C), components of the cleaning system 120 are viewable by an observer. In the cleaning position (shown in FIGS. 1C and 2C), the first arm 106 and the first wiper blade 108 rotate relative to the first base 132 and the exterior surface 101 such that a portion of the first wiper blade 108 engages the exterior surface 101 (e.g., the body 102 and/or the glazing 104) to clean the exterior surface 101. Similarly, the second arm 110 and the second wiper blade 112 rotate relative to the second base 133 and the exterior surface 101 such that a portion of the second wiper blade 112 engages the exterior surface 101 (e.g., the body 102 and/or the glazing 104) to clean the exterior surface 101. In other words, the first arm 106 is rotated relative to the first base 132 such that the first arm 106 and the first base 132 are not approximately aligned in the extension direction 138 when the first arm 106 is in the cleaning position. In addition, a value of a cleaning angle Ac defined between the first arm 106 and the first base 132 is non-zero when the first arm 106 and the first base 132 are in the cleaning position. The value of the cleaning angle Ac increases as the first arm 106 rotates away from the first base 132 until the cleaning angle Ac reaches a maximum value (e.g., A_{CMax}, shown in FIG. 1C). The maximum cleaning angle A_{CMax} shown in FIG. 1C is provided for example purposes and may be larger or smaller than as shown in FIG. 1C.

FIG. 3A is an illustration of a cross-section of the cleaning system 120 of FIG. 2A across A-A. FIG. 3A shows the cleaning system 120 in the recessed position, where the components of the cleaning system 120 are hidden from view from an observer. FIG. 3B is an illustration of a cross-section of the cleaning system 120 of FIG. 2B across B-B with the cleaning system in the raised position, where the components of the cleaning system 120 are visible to an observer. The first wiper blade 108 is shown to include the contact surface 240 and a protrusion 342 spaced apart from the contact surface 240 in the extension direction 138. The protrusion 342 is configured to engage with a recess 344 defined by the connector 230 to couple the first wiper blade 108 to the connector 230. The connector 230 is coupled to first arm 106 and is configured for connection with the first wiper blade 108 (e.g., via the recess 344). Though the contact surface 240 is shown as having a triangular shape, various other shapes may be implemented.

The cleaning system 120 shown in FIG. 3A is in the recessed position. As shown, the contact surface 240 of the first wiper blade 108 is spaced apart from the body 102 and/or the glazing 104 in the extension direction 138 when the first base 132 is in the recessed position. In addition, the outer surface 250 of the first base 132 is spaced apart from the body 102 and/or the glazing 104 in the extension direction 138 with the first base 132 in the recessed position. Furthermore, the exterior surface 252 of the first arm 106 is generally aligned (e.g., within three millimeters of alignment) with the body 102 and/or the glazing 104 with the first arm 106 in the recessed position. Accordingly, the first base 132, the first wiper blade 108, and the connector 230 are hidden from view when the cleaning system 120 is in the recessed position. For example, the body 102 may define an opening (e.g., between the body 102 and the glazing 104), and the first arm 106 is configured to occupy a portion of the opening when the first arm 106 is in the recessed position. More specifically, the exterior surface 252 may have a shape that follows a contour similar to a contour followed by the body 102 and/or the glazing 104 such that a transition between the body 102 and/or the glazing 104 and the exterior surface 252 is less than, for example, three millimeters. Thus, the transition between the body 102 and/or the glazing 104 and the exterior surface 252 may be imperceptible to an observer.

The cleaning system 120 shown in FIG. 3B is in the raised position. As shown, the contact surface 240 of the first wiper blade 108 is generally aligned (e.g., within three millimeters of alignment) with the exterior surface 101 of the body 102 and/or the glazing 104 when the first base 132 is in the raised position. In addition, the outer surface 250 of the first base 132 is generally aligned with the body 102 and/or the glazing 104 when the first base 132 is in the raised position. For example, the first base 132 may be configured to occupy a portion of the opening defined by the body 102 when the first base 132 is in the raised position. Thus, when in the raised position, the first wiper blade 108 can move between the first base 132 and the body 102 and/or the glazing 104 (e.g., during rotation of the first arm 106 relative to the body 102 and/or the glazing 104 between the home position and the cleaning position).

The cleaning system 120 also may include a first seal 346 and a second seal 348. The first seal 346 and the second seal 348 may be formed from one or more resilient materials that are configured to deform under a load and then return to an original shape when the load is removed. In some implementations, the first seal 346 and the second seal 348 may be formed from rubber, silicone, or any other type of material that has the desired properties.

The first seal 346 may be coupled to the glazing 104 and may be configured to engage the first arm 106 and the first base 132. For example, the first seal 346 may be configured to engage the first arm 106 when the first arm 106 is in the recessed position. The first seal 346 may also be configured to engage the first base 132 when the first base 132 is in the raised position. In some implementations, the first seal 346 is configured to limit fluid and debris from entering the vehicle 100 between the glazing 104 and the first arm 106 and between the glazing 104 and the first base 132. For example, the first seal 346 may extend from the glazing 104 and across a transition between the glazing 104 and the first arm 106 (when the cleaning system 120 is in the recessed position) and between the glazing 104 and the first base 132 (when the cleaning system 120 is in the raised position).

The second seal 348 may be coupled to the body 102 and may be configured to engage the first arm 106 and the first base 132. For example, the second seal 348 may be configured to engage the first arm 106 when the first arm 106 is in the recessed position. The second seal 348 may also be configured to engage the first base 132 when the first base 132 is in the raised position. In some implementations, the second seal 348 is configured to limit fluid and debris from entering the vehicle 100 between the body 102 and the first arm 106 and between the body 102 and the first base 132. For example, the second seal 348 may extend from the body 102 and across a transition between the body 102 and the first arm 106 (when the cleaning system 120 is in the recessed position) and between the body 102 and the first base 132 (when the cleaning system 120 is in the raised position).

In some implementations, the first seal 346 and the second seal 348 may have a tapered cross-sectional shape. For example, the first seal 346 and the second seal 348 may be thicker at a central portion of the first seal 346 and the second seal 348 (e.g., at or near a boundary of the glazing 104 and the body 102, respectively) and thinner at the outer portions of the first seal 346 and the second seal 348. The tapered cross-sectional shape of the first seal 346 and the second seal 348 may allow the first wiper blade 108 to pass over the first seal 346 during rotation of the first wiper blade 108 relative to the body 102 and/or the glazing 104.

FIG. 4 is an illustration of a cross-section of the cleaning system 120 of FIG. 2C taken across C-C with the cleaning system 120 in the cleaning position (e.g., when a portion of the first wiper blade 108 engages the glazing 104 and/or the exterior surface 101). In the cleaning position, the first arm 106 rotates relative to the glazing 104 (e.g., when the first wiper blade 108 is engaged with the glazing 104 to clean the glazing 104).

The cleaning system 120 may be in the home position or in the cleaning position when the cleaning system 120 is in the raised position. To move between the recessed position and the cleaning position, the cleaning system 120 first reaches the home position. For example, to reach the home position (shown in FIG. 3B) from the recessed position (shown in FIG. 3A), the actuator 234 raises the first arm 106 and the first base 132 to the home position in the extension direction 138. In raising the first arm 106 and the first base 132 to the home position, the cleaning system 120 moves from being hidden to being viewable by an observer. In the home position, the first arm 106 is positioned such that the first base 132 engages the first wiper blade 108, with the first arm 106 spaced apart from the body 102 and/or the glazing 104 in the extension direction 138 (shown in FIG. 3B). To reach the cleaning position (shown in FIG. 4) from the home position, a rotational component of the actuator 234 is configured to rotate the first arm 106 relative to the body 102 and/or the glazing 104 about the actuator axis 236 such that the body 102 and/or the glazing 104 engages the first wiper blade 108 (shown in FIG. 4). To move from the cleaning position to the recessed position, the movements described above may be reversed.

In addition to the home position and the cleaning position, the actuator 234 may be configured to rotate the first arm 106 to the service position (shown in FIG. 1C). The actuator 235 may be configured to rotate the second arm 110 to the service position (in implementations in which the actuator 235 is used). In the service position, the first wiper blade 108 and the second wiper blade 112 may be disengaged from the body 102 and/or the glazing 104 and may also be disengaged from the first base 132 and the second base 133, respectively. Thus, the contact surface 240 of the first wiper blade 108 (shown in FIGS. 3A-3B and in FIG. 4) may be unsupported by the first base 132, the glazing 104, and the exterior surface 101 when the first arm 106 is in the service position. Similarly, the contact surface 241 of the second wiper blade 112 may be unsupported by the second base 133, the glazing 104, and the exterior surface 101 when the second arm 110 is in the service position. For example, the first arm 106 may rotate relative to the body 102 such that a portion of the first arm 106 extends beyond a boundary of the body 102 (e.g., the exterior surface 101) to disengage the first wiper blade 108 from the first base 132, the glazing 104, and the exterior surface 101. Additionally, the second arm 110 may rotate relative to the body 102 such that a portion of the second arm 110 extends beyond the boundary of the body 102 to disengage the second wiper blade 112 from the second base 133, the glazing 104, and the exterior surface 101. More specifically, in the service position the first arm 106 is rotated relative to the first base 132 such that a service angle As is defined between the first arm 106 and the first base 132. The service angle As is larger than the maximum cleaning angle A_{CMax}. Stated differently, when the first arm 106 is in the service position, the first arm 106 is rotated further from the first base 132 than when the first arm 106 is in the cleaning position. The angular relationship between the second arm 110 and the second base 133 is similar to the angular relationship described between the first arm 106 and the first base 132. In the service position, it may be more convenient to perform maintenance (e.g., replace the first wiper blade 108 and the second wiper blade 112) than if maintenance were performed with the first arm 106 and the second arm 110 in the home position or the cleaning position.

In some implementations, the actuator 234 may also be configured to adjust a distance between the first arm 106 and the body 102 and/or the glazing 104 in the extension direction 138 with the first arm 106 in the cleaning position. For example, performance of the first wiper blade 108 may deteriorate over time because a portion of the first wiper blade 108 may lose contact with the glazing 104 in the cleaning position (e.g., the first wiper blade 108 may degrade as it is used over time). The actuator 234 may be configured to move the first arm 106 closer to the glazing 104 in the extension direction 138, thereby maintaining contact between the first wiper blade 108 and the glazing 104 to maintain cleaning performance of the first wiper blade 108. The actuator 234 is further described with reference to FIG. 5. The actuator 235 may be configured to perform a similar function with respect to the second arm 110.

FIG. 5 is an illustration of the actuator 234 of the cleaning system 120. Because the actuator 235 has a structure and function similar to that of the actuator 234, the description of the actuator 234 with respect to the first arm 106 also applies to the actuator 235 with respect to the second arm 110. As described above, the actuator 234 may be configured to move the first arm 106 and the first base 132 together between the recessed position and the raised position in the extension direction 138. The actuator 234 may also be configured to rotate the first arm 106 relative to the first base 132 and/or the body 102 about the actuator axis 236. To perform the movements described, the actuator 234 may include a linear actuator 550 and a rotational actuator 552. The linear actuator 550 may be configured to move the first arm 106 and the first base 132 in the extension direction 138 between the recessed position and the raised position. For example, the linear actuator 550 may include a threaded rod, and the first base 132 may include a corresponding threaded portion configured to engage with the threaded rod such that the first base 132 moves in the extension direction 138 as the threaded rod rotates. The linear actuator 550 may also include a rotary electrical motor that is configured to rotate the threaded portion. As another example, the linear actuator 550 may include a slider-crank mechanism. More specifically, the linear actuator 550 may include a rotary electrical motor coupled to a crank. The crank may be coupled to a rod constrained to move in the extension direction 138. The crank may push or pull the rod based on motion of the rotary portion of the rotary electrical motor, thereby moving the rod in the extension direction 138. The linear actuator 550 may also include a cam-follower mechanism. For example, the linear actuator 550 may include a rotary electrical motor coupled to a cam. The cam may be slidably coupled to a rod (e.g., a follower) configured to move in the extension direction 138 as the rotary motor rotates the cam.

In some implementations, the first arm 106 may be coupled to the linear actuator 550 in a similar fashion as the first base 132. The first arm 106 may also be coupled to the rotational actuator 552 such that the rotational actuator 552 is configured to move the first arm 106 between the home position, the cleaning position, and the service position. For example, the rotational actuator 552 may include a rotary electrical motor that includes a stator and a rotor. The first arm 106 may be coupled to the rotor such that the first arm 106 rotates about the actuator axis 236 as the rotor rotates when the rotary electrical motor operates. In some implementations, the rotational actuator 552 may be coupled to the linear actuator 550 and may move in the extension direction 138 together with the first arm 106. For example, the rotational actuator 552 may be coupled to a rod (e.g., a rod for a slider-crank or a cam-follower) such that the rotational actuator 552 is configured to move in the extension direction 138 with the rod. Though the linear actuator 550 and the rotational actuator 552 are described as separate components within the actuator 234, in some implementations the linear actuator 550 and the rotational actuator 552 may be a unitary component or system configured to move the first arm 106 and the first base 132 as described above.

In some implementations, the actuator 234 may be configured to adjust a force applied by the first wiper blade 108 to the glazing 104 in response to undesirable performance of the first wiper blade 108. More specifically, the force of the first wiper blade 108 on the glazing 104 may be above or below an acceptable range of values, which may negatively impact the performance and/or the life of the first wiper blade 108. This may occur based on degradation of the first wiper blade 108 (e.g., natural degradation from use over time). This may also occur based on the speed of the vehicle 100. For example, a force of the first wiper blade 108 against the glazing 104 may be proportional to the speed of the vehicle 100. More specifically, as the vehicle 100 travels faster, the force of air against the first arm 106 increases, thereby increasing the force of the first wiper blade 108 against the glazing 104. As the vehicle 100 travels slower, the force of air against the first arm 106 decreases, thereby decreasing the force of the first wiper blade 108 against the glazing 104.

Based on the force of the first wiper blade 108 on the glazing 104, the actuator 234 may increase or decrease a distance between the first arm 106 and the glazing 104 in the extension direction 138, thereby increasing or decreasing the force applied by the first wiper blade 108 to the glazing 104. For example, the linear actuator 550 of the actuator 234 may rotate the threaded rod in a first direction that decreases the distance between the first arm 106 and the glazing 104 in the extension direction 138. The linear actuator 550 of the actuator 234 may also rotate the threaded rod in a second direction that increases the distance between the first arm 106 and the glazing 104 in the extension direction 138. When the force applied by the first wiper blade 108 to the glazing 104 is within the acceptable range of values, the actuator 234 may maintain the distance between the first arm 106 and the glazing 104 in the extension direction 138.

As another example, the actuator 234 may be configured to move the first arm 106 and the first base 132 to the raised position in response to a signal from the sensor 116 that indicates upcoming precipitation (e.g., rain, snow, sleet, ice, etc.). In preparation for the upcoming precipitation, the actuator 234 may move the first arm 106 and the first base 132 (e.g., via the linear actuator 550) to the raised position. When there is no threat of upcoming precipitation, the actuator 234 may move the first arm 106 and the first base 132 (e.g., via the linear actuator 550) to the recessed position.

The actuator 234 may also be configured to move the first arm 106 relative to the glazing 104 in response to a signal from the sensor 116 that indicates the glazing 104 is dirty. The actuator 234 may move the first arm 106 relative to the glazing 104 (e.g., via the rotational actuator 552) to clean the glazing 104. When the signal from the sensor 116 indicates that the glazing 104 is clean, the actuator 234 may move the first arm 106 (e.g., via the rotational actuator 552) from the cleaning position to the home position.

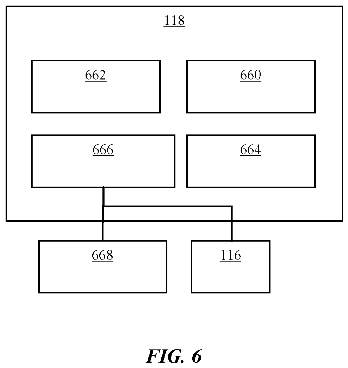

FIG. 6 is a schematic diagram of the controller 118. The controller 118 may be used to implement the systems and methods disclosed herein. In some implementations, the controller 118 may be a separate controller, microprocessor, or microcontroller (e.g., not located in or on the vehicle 100), or may be implemented on the cloud. The controller 118 may also be part of an onboard vehicle controller. For example, the controller 118 may receive signals from the sensor 116 and the cleaning system 120 may clean the glazing 104 based on the signals. In an example hardware configuration, the controller 118 generally includes a processor 660, a memory 662, a storage 664, and a communication interface 666. Data and/or signals received from the sensor 116 may include signals related to a wear level of the first arm 106, an upcoming weather condition, a speed of the vehicle 100, a cleanliness level of the glazing 104, etc. The processor 660 may be any suitable processor, such as a central processing unit, for executing computer instructions and performing operations described thereby. The memory 662 may be a volatile memory, such as random-access memory (RAM). The storage 664 may be a non-volatile storage device, such as a hard disk drive (HDD) or a solid-state drive (SSD). The storage 664 may form a computer readable medium that stores instructions (e.g., code) executed by the processor 660 for operating external devices 668 in the manners described above and below. The communication interface 666 is in communication with, for example, the external devices 668 and the sensor 116. The external devices 668 may include, for example, systems or devices through which the occupant may provide information to the controller 118. For example, the external devices 668 may include devices such as a mobile device, a tablet computer, or other electronic devices that may communicate with the controller 118. Accordingly, the controller 118 may include an Internet connection to facilitate communication between the controller 118 and the external devices 668.

Implementations described herein disclose a cleaning system (e.g., the cleaning system 120) that provides an aesthetically uniform appearance when the cleaning system is not in use. For example, the cleaning system 120 may be hidden from view when not in use, making the exterior surface 101 look like a continuous surface (e.g., without an observable offset between the exterior surface 101 and the cleaning system 120). Hiding the cleaning system 120 from view when not in use may provide for enhanced visibility from within the vehicle 100. Additionally, the cleaning system 120 may enhance function of wiper blades (e.g., the first wiper blade 108 and the second wiper blade 112) by providing the ability to adjust a distance between the wiper blades and the glazing 104 to account for additional pressure on the wiper blades due to air resistance.

As described above, one aspect of the present technology is the gathering and use of data available from various sources for use during operation of the cleaning system 120 . As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user preference related information that allows implementation of function: e.g., adjustment of operation of the vehicle 100 according to the user preference information. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of storing a user profile for operation of the vehicle 100, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, user preference information may be determined each time the vehicle 100 is used, such as by entering the user preference information in real time, and without subsequently storing the information or associating with the particular user.

## Claims

1. A cleaning system, comprising:
an arm configured for connection to a wiper blade; and
a base that is spaced apart from the arm in an extension direction such that the wiper blade is positionable between the arm and the base in the extension direction,
wherein the base and the arm are each configured to move in the extension direction between a recessed position and a raised position relative to an exterior surface of a vehicle, the arm is configured to rotate relative to the base when the base and the arm are in the raised position, and relative motion between the base and the arm is limited when the base and the arm move in the extension direction between the recessed position and the raised position.

2. The cleaning system of claim 1, wherein the base is configured to remain generally stationary relative to the exterior surface of the vehicle during rotation of the arm relative to the exterior surface of the vehicle.

3. The cleaning system of claim 1, wherein when the arm and the base are in the raised position, the arm has a home position, a cleaning position, and a service position,
wherein in the home position, the arm and the base are approximately aligned in the extension direction,
wherein in the cleaning position, the arm is rotated relative to the base, wherein a cleaning angle is defined between the arm and the base and a value of the cleaning angle increases as the arm rotates away from the base until the cleaning angle reaches a maximum value,
wherein in the service position, the arm is rotated relative to the base such that a service angle is defined between the arm and the base, and the service angle is larger than the maximum value of the cleaning angle.

4. The cleaning system of claim 3, further comprising an actuator configured to move the arm and the base between the recessed position and the raised position, the actuator further configured to rotate the arm relative to the base between the home position, the cleaning position, and the service position when the arm and the base are the raised position.

5. The cleaning system of claim 4, wherein the actuator is configured to rotate the arm relative to the exterior surface of the vehicle between the home position and the service position.

6. The cleaning system of claim 4, wherein the actuator is configured to adjust a distance between the arm and the exterior surface of the vehicle when the arm is in the cleaning position to adjust a force applied by the wiper blade to the exterior surface of the vehicle.

7. The cleaning system of claim 4, further comprising:
a sensor configured to generate a signal indicative of a wear level of the wiper blade, wherein the actuator is configured to adjust a force applied by the wiper blade to the exterior surface of the vehicle based on the signal.

8. The cleaning system of claim 4, further comprising:
a sensor configured to generate a signal indicative of an upcoming weather condition, wherein the actuator is configured to move the arm and the base to the raised position based on the signal.

9. The cleaning system of claim 4, further comprising:
a sensor configured to generate a signal indicative of a speed of the vehicle, wherein the actuator is configured to adjust a force applied by the wiper blade to the exterior surface of the vehicle based on the signal.

10. The cleaning system of claim 4, further comprising:
a sensor configured to generate a signal indicative of a cleanliness level of the exterior surface of the vehicle, wherein the actuator is configured to move the arm relative to the exterior surface of the vehicle based on the signal.

11. The cleaning system of claim 4, wherein the exterior surface of the vehicle includes a glazing, and the glazing is transparent to visible light.

12. The cleaning system of claim 1, wherein an exterior surface of the arm is generally aligned with the exterior surface of the vehicle when the arm is in the recessed position.

13. The cleaning system of claim 1, wherein an outer surface of the base is spaced apart from the exterior surface of the vehicle in the extension direction when the base is in the recessed position, and the outer surface of the base is generally aligned with the exterior surface of the vehicle when the base is in the raised position.

14. The cleaning system of claim 1, wherein a contact surface of the wiper blade is recessed from the exterior surface of the vehicle in the extension direction when the base is in the recessed position, and the contact surface of the wiper blade is generally aligned with the exterior surface of the vehicle when the base is in the raised position.

15. The cleaning system of claim 1, further comprising a second arm configured for connection to a second wiper blade that is positionable between the second arm and the base,
wherein the second arm and the base are each configured to move in the extension direction between a recessed position and a raised position relative to the exterior surface of the vehicle, wherein relative motion between the second arm and the base is limited when the second arm and the base move in the extension direction between the recessed position and the raised position,
wherein the arm is configured to position the wiper blade in a first position, the second arm is configured to position the second wiper blade in a second position, and the first position and the second position are spaced apart along an axis of the vehicle.
